# EUROPEAN PATENT APPLICATION

(11) **EP 3 422 152 A1**
(43) Date of publication of application: **02.01.2019**
(21) Application number: 17756228.7
(22) Date of filing: 10.02.2017
(51) Int. Cl.: G06F 3/01, B25J 3/00, H04Q 9/00

(54) **REMOTE OPERATION DEVICE, REMOTE OPERATION METHOD, REMOTE OPERATION SYSTEM, AND PROGRAM**

(30) Priority: 23.02.2016 JP 2016031983
(71) Applicant: Sony Corporation, Tokyo 108-0075 (JP)
(72) Inventor: OKAMOTO Hideo, Tokyo 108-0075 (JP); NAKAGAWA Takaaki, Tokyo 108-0075 (JP); DOI Hiromasa, Tokyo 108-0075 (JP); KONDO Kazuhiro, Tokyo 108-0075 (JP)
(74) Representative: MFG Patentanwälte Meyer-Wildhagen Meggle-Freund Gerhard PartG mbB
(86) International application number: PCT/JP2017/004845
(87) International publication number: WO 2017/145787

(57) **Abstract**

The present disclosure relates to a remote control apparatus, a remote control method, a remote control system, and a program that are capable of achieving remote control by an intuitive motion using only a hand and an eye.

A plurality of imaging units capture images of a space in which an eye and a hand of a user and an operation target device are present. Positions of the eye and the hand of the user and the operation target device are specified on the basis of the captured images. A line of sight of the user is specified on the basis of a positional relationship between the eye of the user and the operation target device. A motion of the user that is made while the hand is located on a straight line being the line of sight is assumed as an operation instruction given to the operation target device. The operation instruction is transmitted to the operation target device to cause the operation target device to operate. The present disclosure can be applied to a remote control apparatus.

## Description

### Technical Field

The present disclosure relates to a remote control apparatus, a remote control method, a remote control system, and a program, and particularly, to a remote control apparatus, a remote control method, a remote control system, and a program that are capable of sensuously easily achieving remote control.

### Background Art

A technology of achieving remote control in an indoor or in-vehicle device is proposed.

For example, a technology of achieving remote control without using a remote controller is proposed (see Patent Literature 1) .

Further, a technology of achieving remote control by moving a hand for decision-making, such as touching an image projected onto a display of an HMD (Head Mount Display) or the like, is proposed (see Patent Literature 2).

### Citation List

### Patent Literature

Patent Literature 1: Japanese Patent Application Laid-open No. 2006-301654
Patent Literature 2: Japanese Patent No. 5791131

### Disclosure of Invention

### Technical Problem

However, each of the remote control technologies has been difficult to use easily and intuitively, because a remote controller is indispensable for use by a user, or the user has to learn unnatural motions, for example.

In other words, in the case of Patent Literature 1, it takes time to transmit a user's intension to a device, and an unnatural motion is necessary.

Further, in the case of Patent Literature 2, assuming that an operation of touching a projected image is made via an HMD, in which a viewing angle and the feeling of a motion of a hand are different from regular ones, it is necessary to practice correction of gaps in the field of view on a display, an operating speed of the hand, and the like. This also needs unnatural motions.

The present disclosure has been made in view of the circumstances as described above and is provided particularly to achieve remote control by an intuitive motion using only a hand and an eye.

### Solution to Problem

A remote control apparatus according to a first aspect of the present disclosure is a remote control apparatus including: a position detection unit that detects positions of a device to be operated, and an eye and a hand of a user; a user motion recognition unit that recognizes a motion of the user when a positional relationship between the eye, the hand, and the device maintains a predetermined positional relationship; an operation instruction specifying unit that specifies an operation instruction for the device to be operated, the operation instruction corresponding to the motion of the user; and a drive instruction unit that drives the device to be operated on the basis of the operation instruction specified by the operation instruction specifying unit.

The user motion recognition unit can be configured to specify a line of sight of the user from the eye to the device on the basis of the positional relationship between the eye, the hand, and the device, and to recognize the motion of the user when a positional relationship in which the hand is located on a straight line being the line of sight is maintained.

The user motion recognition unit can be configured to specify the line of sight of the user from the eye to the device on the basis of the positional relationship between the eye, the hand, and the device, and to recognize a motion of the hand on the straight line being the line of sight as the motion of the user when a positional relationship in which a predetermined finger of the hand is located on the straight line being the line of sight is maintained.

The device to be operated can be configured to further include a display unit that displays a UI (User Interface) image for controlling an operation of the device, and the user motion recognition unit can be configured to specify a line of sight of the user from the eye to a predetermined UI image on the display unit of the device on the basis of the positional relationship between the eye, the hand, and the device, and to recognize the motion of the user, which is made when a positional relationship in which the hand is located on a straight line being the line of sight is maintained, as a motion of the user to the UI image.

The display unit can be configured to be a see-through HMD (Head Mount Display) that the user wears, and the user motion recognition unit can be configured to specify the line of sight of the user from the eye to a predetermined UI image on the HMD serving as the display unit of the device on the basis of the positional relationship between the eye, the hand, and the device, and to recognize the motion of the user, which is made when the positional relationship in which the hand is located on the straight line being the line of sight is maintained at a forward position relative to the HMD when viewed from the user, as a motion of the user to the UI image.

The position detection unit can be configured to estimate, when the position detection unit fails to detect the position of at least any one of the eye and the hand, the positions of the eye and the hand on the basis of another body part of the detected user, and the user motion recognition unit can be configured to recognize the motion of the user when an estimated positional relationship between the eye, the hand, and the device maintains a predetermined positional relationship.

The position detection unit can be configured to include a plurality of imaging units that capture images in a plurality of imaging directions, and detect the positions of the device to be operated, and the eye and the hand of the user on the basis of the images captured with the plurality of imaging units.

The user motion recognition unit can be configured to recognize the motion of the user when any one of a first positional relationship between a right eye of the eyes, the hand, and the device, a second positional relationship between a left eye of the eyes, the hand, and the device, and a third positional relationship between a middle position of the left and right eyes of the eyes, the hand, and the device maintains a predetermined positional relationship.

A remote control method according to the first aspect of the present disclosure is a remote control method including the steps of: detecting positions of a device to be operated, and an eye and a hand of a user; recognizing a motion of the user when a positional relationship between the eye, the hand, and the device maintains a predetermined positional relationship; specifying an operation instruction for the device to be operated, the operation instruction corresponding to the motion of the user; and driving the device to be operated on the basis of the specified operation instruction.

A program according to the first aspect of the present disclosure is a program causing a computer to function as: a position detection unit that detects positions of a device to be operated, and an eye and a hand of a user; a user motion recognition unit that recognizes a motion of the user when a positional relationship between the eye, the hand, and the device maintains a predetermined positional relationship; an operation instruction specifying unit that specifies an operation instruction for the device to be operated, the operation instruction corresponding to the motion of the user; and a drive instruction unit that drives the device to be operated on the basis of the operation instruction specified by the operation instruction specifying unit.

In the first aspect of the present disclosure, positions of a device to be operated, and an eye and a hand of a user are detected, a motion of the user is recognized when a positional relationship between the eye, the hand, and the device maintains a predetermined positional relationship, an operation instruction for the device to be operated is specified, the operation instruction corresponding to the motion of the user, and the device to be operated is driven on the basis of the specified operation instruction.

A remote control system according to a second aspect of the present disclosure is a remote control system including a plurality of devices to be operated that include at least one master device and at least one different slave device, the master device including a position detection unit that detects positions of the master device, the slave device, and an eye and a hand of a user, a user motion recognition unit that recognizes a motion of the user when a positional relationship between the eye, the hand, and the master device or a positional relationship between the eye, the hand, and the slave device maintains a predetermined positional relationship, an operation instruction specifying unit that specifies an operation instruction for the master device or the slave device, the operation instruction corresponding to the motion of the user, a master drive instruction unit that drives the master device on the basis of the operation instruction, and a master communication unit that transmits the operation instruction to the slave device, the slave device including a slave communication unit that receives the operation instruction for the slave device, the operation instruction being transmitted from the master device, and a slave drive instruction unit that drives the slave device on the basis of the operation instruction.

When the remote control system includes a first operation device and a second operation device, the first operation device being the master device or the slave device and having a display function, the second operation device being the master device or the slave device and being to be operated, the position detection unit can be configured to detect the positions of the first operation device, the second operation device, and the eye and the hand of the user, the user motion recognition unit can be configured to recognize a first predetermined motion of the user and recognize the first operation device as a target device for displaying a UI that controls the second operation device, when the positional relationship between the eye, the hand, and the first operation device maintains a predetermined first positional relationship, the operation instruction specifying unit can be configured to specify an operation instruction causing the first operation device to display the UI that controls the second operation device in accordance with the first motion of the user, the master drive instruction unit can be configured to drive the first operation device on the basis of the operation instruction for displaying the UI that controls the second operation device, the user motion recognition unit can be configured to recognize a second predetermined motion of the user and recognize the second operation device as a target device for performing an operation corresponding to an operation of the UI displayed by the first operation device, when the positional relationship between the eye, the hand, and the second operation device maintains a predetermined second positional relationship, the operation instruction specifying unit can be configured to specify an operation instruction causing the second operation device to perform the operation corresponding to the operation of the UI displayed by the first operation device in accordance with the second motion of the user, and the master drive instruction unit can be configured to drive the second operation device on the basis of the operation instruction corresponding to the operation of the UI displayed by the first operation device.

The slave device can be configured to be a curtain opening and closing apparatus.

The slave device can be configured to be a reclining apparatus for a rear seat of a vehicle.

The user motion recognition unit can be configured to recognize the motion of the user on the basis of the positional relationship between the eye, the hand, and the slave device when a line of sight of the user is a line of sight to the reclining apparatus for a rear seat through a rearview mirror of the vehicle, the reclining apparatus being the slave device, and when a positional relationship in which the hand is located on a straight line being the line of sight is maintained.

In the second aspect of the present disclosure, a remote control system including a plurality of devices to be operated that include at least one master device and at least one different slave device is provided. By the master device, positions of the master device, the slave device, and an eye and a hand of a user are detected, a motion of the user is recognized when a positional relationship between the eye, the hand, and the master device or a positional relationship between the eye, the hand, and the slave device maintains a predetermined positional relationship, an operation instruction for the master device or the slave device is specified, the operation instruction corresponding to the motion of the user, the master device is driven on the basis of the specified operation instruction, and the operation instruction is transmitted to the slave device. By the slave device, the operation instruction for the slave device is received, the operation instruction being transmitted from the master device, and the slave device is driven on the basis of the operation instruction.

### Advantageous Effects of Invention

According to one aspect of the present disclosure, it is possible to achieve remote control by an intuitive motion using only a hand and an eye.

### Brief Description of Drawings

Fig. 1 is an outer appearance view of a first embodiment of an operation device to which the present disclosure is applied.
Fig. 2 is a diagram for describing a function for achieving the operation device of Fig. 1.
Fig. 3 is a flowchart for describing remote control processing of the operation device of Fig. 1.
Fig. 4 is a diagram for describing a first modified example of the operation device of Fig. 1.
Fig. 5 is a diagram for describing a second modified example of the operation device of Fig. 1.
Fig. 6 is an outer appearance view of a second embodiment of an operation device system including an operation device to which the present disclosure is applied.
Fig. 7 is a diagram for describing a function of the operation device for achieving the operation device system of Fig. 6.
Fig. 8 is a flowchart for describing remote control processing of the operation device system of Fig. 7.
Fig. 9 is a diagram for describing a first modified example of the operation device system of Fig. 6.
Fig. 10 is a diagram for describing a second modified example of the operation device system of Fig. 6.
Fig. 11 is a diagram for describing correction of the line of sight.

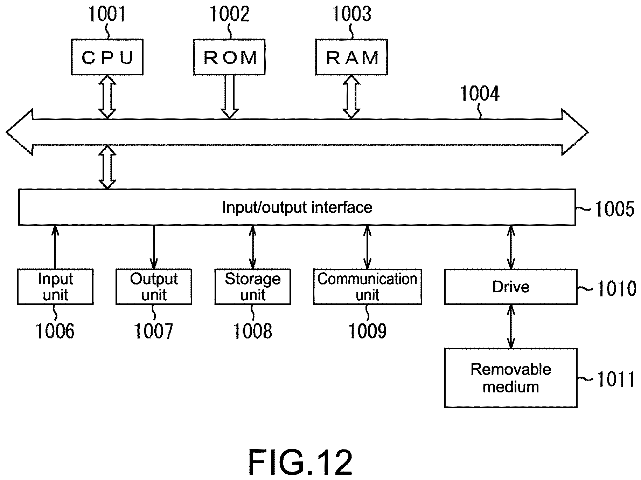

Fig. 12 is a diagram for describing a configuration example of a general-purpose personal computer.

### Mode(s) for Carrying Out the Invention

Suitable embodiments of the present disclosure will be described in detail below with reference to the attached drawings. It should be noted that in this specification and the drawings, components having substantially identical functional configurations are denoted by an identical reference symbol and description thereof will be omitted.

Further, description will be given in the following order.
1. First Embodiment
2. First Modified Example of First Embodiment
3. Second Modified Example of First Embodiment
4. Second Embodiment
5. First Modified Example of Second Embodiment
6. Second Modified Example of Second Embodiment
7. Correction of Line of Sight
8. Application Example

### <<1. First Embodiment>>

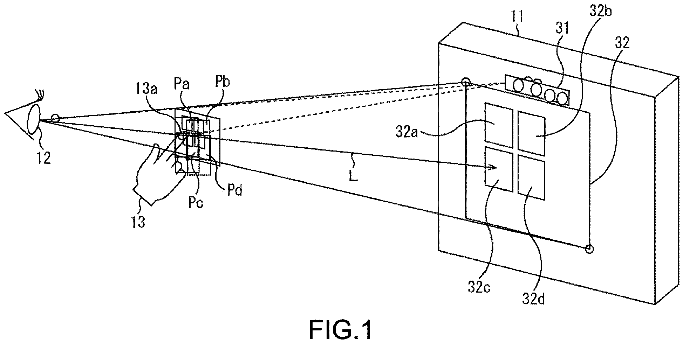

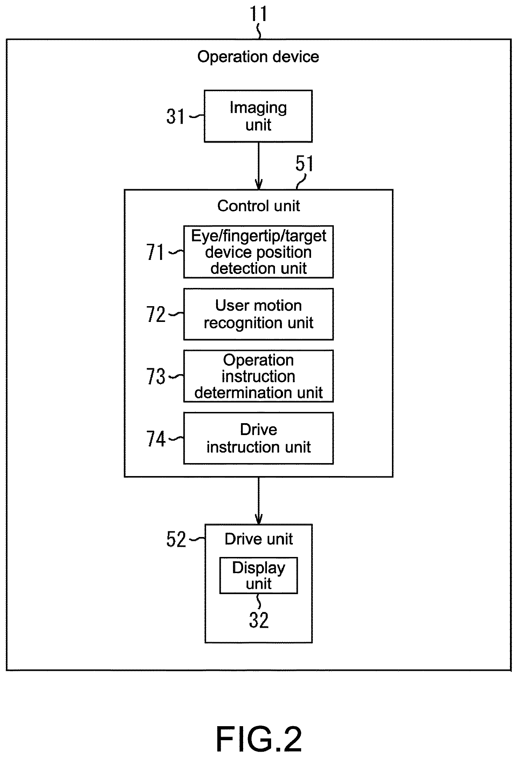

Figs. 1 and 2 each show a configuration example of a first embodiment of an operation device to which a remote control apparatus of the present disclosure is applied. It should be noted that Fig. 1 is an outer appearance view of the operation device, and Fig. 2 is a block diagram for describing a function for achieving the operation device of Fig. 1.

An operation device 11 of Fig. 1 is, for example, a home electric appliance that is remotely controllable by a user. Examples of the operation device 11 include an air conditioner, a light, an intercom, and a PC (personal computer) that are remotely controllable.

The outer appearance of the operation device 11 includes an imaging unit 31 and a display unit 32.

The imaging unit 31 includes, for example, a plurality of CMOS (Complementary Metal Oxide Semiconductor) image sensors. The imaging unit 31 captures images of a space where a user of the operation device 11 is present and images for recognizing positions of an eye and a fingertip of a hand of the user within the space and a position of the line of sight of the user.

More specifically, the imaging unit 31 includes image sensors that capture images of the space from a plurality of directions. The imaging unit 31 can capture images within the space and can also measure distances in the respective images like a depth camera, for example. In other words, the imaging unit 31 measures the position of the user within the image and the positions of the eye, the hand, and the fingertip of the user, and thus recognizes the positions within the space. Further, in a case where the imaging unit 31 is constituted of a monocular camera, the imaging unit 31 at least needs to capture images from at least three directions. Thus, at least three or more imaging units 31 are necessary.

The display unit 32 is constituted of an LCD (Liquid Crystal Display), an organic EL (Electro-Luminescence), or the like, and displays UIs (User Interfaces) for controlling the operation of the operation device 11.

Further, the operation device 11 includes, as functions, a control unit 51 and a drive unit 52.

The control unit 51 controls the whole of the operation of the operation device 11. The control unit 51 recognizes the positions of the eye and the fingertip of the hand of the user within the space on the basis of the images supplied from the imaging unit 31, and thus recognizes an operation instruction of the user to the operation device 11 and controls the drive unit 52 to be driven so as to achieve a corresponding operation.

More specifically, the control unit 51 includes an eye/fingertip/target device position detection unit 71, a user motion recognition unit 72, an operation instruction determination unit 73, and a drive instruction unit 74.

The eye/fingertip/target device position detection unit 71 recognizes a user from the images supplied from the imaging unit 31 and recognizes positions of an eye and a fingertip of the user. Further, the eye/fingertip/target device position detection unit 71 detects a positional relationship between the eye, the fingertip, and a target device.

In more detail, the eye/fingertip/target device position detection unit 71 has functions of detecting a figure of a human body, such as a hand, a leg, a head, or a moving body, and detecting a face image and can also extract various organs such as an eye, a nose, a mouth, and an ear included in the detected face image. The eye/fingertip/target device position detection unit 71 specifies the positions of the eye and the fingertip by those functions. Further, also when the image does not show an eye, a fingertip, and the like, the eye/fingertip/target device position detection unit 71 estimates the positions of the fingertip and the eye on the basis of a posture or the positions of the nose, the mouth, the ear, and the like other than the eye.

When the positions of the respective eye, fingertip, and target device have a particular positional relationship, the eye/fingertip/target device position detection unit 71 supplies information of the respective positions to the user motion recognition unit 72. It should be noted that the target device refers to the operation device 11 itself in the example of Fig. 1.

Here, the particular positional relationship refers to, for example, as shown in Fig. 1, a positional relationship in which an eye 12 of the user, a fingertip 13a of a hand 13 of the user, and the operation device 11 serving as the target device are aligned on a straight line being a line of sight that begins at the eye 12 of the user and ends at the operation device 11 serving as the target device. When such a positional relationship is established, the eye/fingertip/target device position detection unit 71 assumes a change in information of the respective positions as a state where an operation for giving a certain instruction to the eye/fingertip/target device position detection unit 71 itself serving as the target device is being performed. During maintaining of that positional relationship, the eye/fingertip/target device position detection unit 71 supplies the information of the respective positions to the user motion recognition unit 72.

The user motion recognition unit 72 recognizes a motion of the user, which is made on the operation device 11 serving as the target device by moving a fingertip or a palm, on the basis of time-series changes in information of the respective positions of the eye, the fingertip, and the target device that are recognized by the eye/fingertip/target device position detection unit 71, and supplies information on that motion to the operation instruction determination unit 73.

In other words, specifically, as shown in Fig. 1, in a case where operation buttons 32a to 32d serving as UIs are displayed on the display unit 32, the user motion recognition unit 72 recognizes, as information of a motion, for example, information indicating that the positions of the eye 12, the fingertip 13a, and the operation button 32c displayed on the display unit 32 of the operation device 11 serving as the target device are present on a straight line being the line of sight and indicating in chronological order that the fingertip 13a moves to the operation device 11 side or to the eye 12 side, repeats those motions, and stays at an identical position for a predetermined time. The user motion recognition unit 72 then supplies the recognized information of the motion to the operation instruction determination unit 73.

The operation instruction determination unit 73 acquires the information of the motion, which is supplied from the user motion recognition unit 72, and determines an operation instruction, which is a user's intension, on the basis of the information of the motion, to supply information on the operation instruction as a determination result to the drive instruction unit 74.

More specifically, the operation instruction determination unit 73 stores control rules in which motions and operation instructions corresponding thereto (specific drive content of the drive unit 52, UI images, etc.) are prescribed information in a built-in memory (not shown). The operation instruction determination unit 73 determines an operation instruction corresponding to the motion supplied from the user motion recognition unit 72, and thus supplies a determined operation instruction to the drive instruction unit 74.

In other words, for example, as shown in Fig. 1, when information of a motion indicating that the eye 12, the fingertip 13a, and the operation button 32c are present on a straight line being the line of sight and that the fingertip 13a moves to the operation device 11 side in the above state is supplied, the operation instruction determination unit 73 searches for a corresponding operation instruction from the control rules for determination. For example, when the operation button 32c is pressed and shows that it is selected, the operation instruction determination unit 73 supplies information on a corresponding operation instruction to the drive instruction unit 74.

The drive instruction unit 74 gives an instruction to operate the drive unit 52 on the basis of the information of the operation instruction supplied from the operation instruction determination unit 73 such that the drive unit 52 executes a corresponding operation.

More specifically, the drive instruction unit 74 generates, for example, UIs for controlling an operation and displays the UIs on the display unit 32 as a part of the drive unit 52. Further, the drive instruction unit 74 switches display of the UIs and causes the display unit 32 to display the UIs on the basis of the information of the operation instruction from the operation instruction determination unit 73. In other words, for example, when the fingertip 13a points a position Pc within the space and thus the eye 12, the fingertip 13a, and the operation button 32c are disposed on a straight line being a line of sight L, in order to indicate that the operation button 32c is selected, the drive instruction unit 74 controls the display unit 32 as a part of the drive unit 52 to display the frame of the operation button 32c in a color different from that of the other frames.

It should be noted that, in Fig. 1, when the eye 12 and the operation buttons 32a to 32d are at fixed positions, and when the fingertip 13a points a position Pa in the space, the eye 12, the fingertip 13a, and the operation button 32a are aligned on the straight line being the line of sight L. In this state, when the fingertip 13a moves to the operation device 11 side on the line of sight L, it is assumed that the operation button 32a is pressed and selected. Similarly, when positions Pb and Pd in the space are selected with the fingertip 13a, it is assumed that the operation buttons 32b and 32d are selected.

Further, when a UI corresponding to the information of the operation instruction is displayed, information indicating how the operation device 11 has recognized the operation instruction (hereinafter, also referred to simply as recognition information) is fed back to the user. Feedback of the recognition information may be performed by not only displaying of UIs on the display unit 32 but also presentation by another technique, as long as the recognition information can be presented to the user.

More specifically, a technique of presenting the recognition information to the user may allow, for example, a light-emitting unit such as an LED (Light Emission Diode) to emit light corresponding to the operation instruction (the light including light having a color, a blinking pattern, or the like corresponding to the operation instruction), allow a sound output unit such as a speaker to output sound corresponding to the operation instruction (the sound including a melody or the like corresponding to the operation instruction), or allow an odor generation unit that generates a predetermined odor to emit an odor corresponding to the operation instruction (the odor including a scent of a flower whose type corresponds to the operation instruction). Additionally, the operation device 11 itself may perform a reaction or an operation corresponding to the operation instruction.

The drive unit 52 includes a drive mechanism for operating the operation device 11 and operates in accordance with the operation instruction, e.g., for an air conditioner, sets an air volume, a temperature, or the like; for a light, turns the light on/off and also adjusts brightness or the like; for an intercom or the like, turns a call on/off or the like; and for a PC or the like, performs various types of arithmetic processing and display processing or the like. Further, the drive unit 52 includes the display unit 32 and switches display of the UIs for display on the basis of the operation instruction. Furthermore, the UI is not limited to the operation button and may be others capable of being intuitively operated. For example, the UI may be an operation tab, an operation lever, and the like. Moreover, in a case where the UIs such as an operation tab and an operation lever are used, the motion corresponding to the operation instruction may include, for example, a motion of a hand such as picking up and turning a tab and a motion of a hand such as gripping and operating an operation lever.

### <Remote Control Processing>

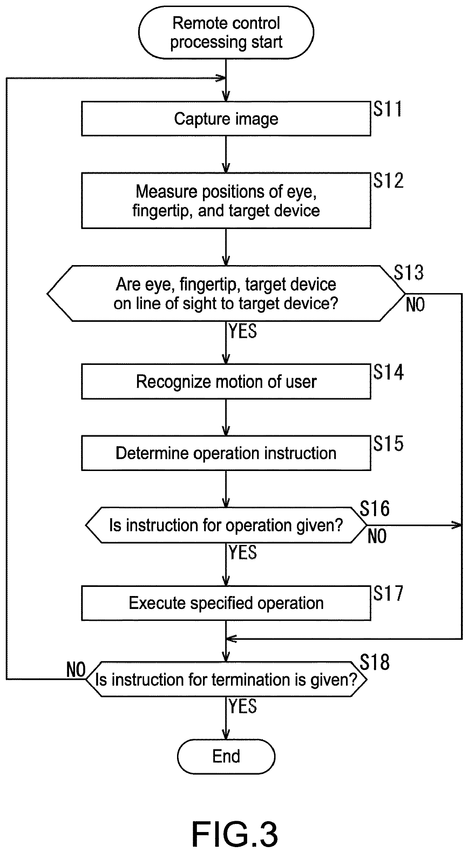

Next, remote control processing of the operation device 11 will be described with reference to the flowchart of Fig. 3.

In Step S11, the imaging unit 31 captures an image of a direction in which a user who operates the operation device 11 is present, and supplies the captured image to the control unit 51.

In Step S12, the eye/fingertip/target device position detection unit 71 detects positions of an eye and a fingertip of the user, and the operation device 11 as the target device within a space on the basis of the image supplied from the imaging unit 31.

In Step S13, the eye/fingertip/target device position detection unit 71 determines whether the positional relationship between the eye and the fingertip of the user and the target device is on a straight line being the line of sight L. In Step S13, for example, as shown in Fig. 1, when the user gives the line of sight L to the operation button 32c, which is a UI on the display unit 32 of the operation device 11, and when the user moves his/her fingertip 13a to be put on the line of sight L such that the eye 12 and the fingertip 13a of the user and the operation button 32c as a UI displayed on the display unit 32 are aligned on the straight line, the processing proceeds to Step S14.

In Step S14, the user motion recognition unit 72 recognizes a motion of the user, which is made on the operation device 11 serving as the target device by moving the fingertip, on the basis of time-series changes in information on the positions of the eye, the fingertip, and the target device that are recognized by the eye/fingertip/target device position detection unit 71. The user motion recognition unit 72 then supplies information of the recognized motion to the operation instruction determination unit 73.

In Step S15, when acquiring the information of the motion, which is supplied from the user motion recognition unit 72, the operation instruction determination unit 73 determines an operation instruction for the operation device 11, which is a user's intention corresponding to the motion of the user, on the basis of the control rules stored in the built-in memory. The operation instruction determination unit 73 then supplies information of the operation instruction, which is a determination result, to the drive instruction unit 74.

In Step S16, the drive instruction unit 74 determines whether the information of the operation instruction gives an instruction for some operation. In Step S16, if an instruction for some operation is given, the processing proceeds to Step S17.

In Step S17, the drive instruction unit 74 controls the drive unit 52 to execute an operation corresponding to the operation instruction.

In other words, in initial processing in which a target operation device 11 is specified, the drive instruction unit 74 displays a UI for controlling the operation of the operation device 11 on the display unit 32. For example, in the case of Fig. 1, the operation buttons 32a to 32d are displayed as UIs on the display unit 32.

Further, in a state where the operation buttons 32a to 32d are displayed, for example, in a case where the information of the motion is information of a motion of pressing down the operation button 32c, the drive instruction unit 74 switches display of the frame of the operation button 32c serving as the UI to display of causing the displayed frame of the operation button 32c to emit light with a predetermined color, in order to provide information indicating that the operation button 32c is pressed down.

Furthermore, on the basis of the control rules, for example, in a case where the operation button 32c is pressed down such that the drive unit 52 of the operation device 11 as the target device controls an air volume or a temperature of an air conditioner, that is, in a case where it is necessary to increase the number of revolutions of a fan motor in order to increase the number of revolutions of a compressor or the air volume of the fan to change the setting of the air volume or the temperature with respect to the operation instruction, the drive instruction unit 74 controls the compressor or the fan that serves as the drive unit 52 to increase the number of revolutions or the air volume.

In Step S18, the drive instruction unit 74 determines whether the operation instruction gives an instruction to terminate the operation. If the operation instruction does not give an instruction to terminate the operation, the processing returns to Step S12 and repeats the subsequent processing.

Further, in Step S13, in a case where the eye, the fingertip, and the target device are not aligned on the straight line, the processing of Steps S14 to S17 are skipped.

Furthermore, in Step S16, if an instruction for some operation is not given, that is, for example, it is not recognized what operation instruction is given, or if an operation instruction is actually not given, the processing of Step S17 is skipped.

In other words, in this case, the processing of Steps S11 to S16 and S18 are repeated until content of the operation is determined. When the content of the operation is determined and an operation is further necessary on the basis of the operation instruction, the processing of Step S17 is executed, and the drive unit 52 is controlled to perform an operation.

Through the processing described above, the user gives the line of sight L to any one of the operation buttons 32a to 32d, each of which is a UI displayed on the display unit 32 of the operation device 11 intended to be operated as shown in Fig. 1, and then puts the fingertip 13a so as to be held over the straight line being the line of sight L, so that the operation device 11 to be operated can be specified. Further, when a predetermined motion is made on the straight line including any one of the operation buttons 32a to 32d, the selection of the button is recognized, so that the operation device 11 can be instructed to perform a predetermined operation.

As a result, without necessity of an accessory device such as a remote controller and without learning of an operation particularly necessary for control, the target device can be remotely controlled by means of an intuitive motion using only an eye and a fingertip.

It should be noted that hereinabove the example of using, in order to specify the positions of the eye and the fingertip, images captured with the imaging unit 31 that captures stereo images has been described. However, if spatial positions of the eye and the fingertip are specified, other methods may be used. For example, an infrared image may be captured, and the positions of the eye and the fingertip may be specified from silhouettes in a region from which a body temperature is detected.

Further, for example, in an image in which eyes are not imaged, for example, in which only the back of the head appears, the shape of the head may be estimated from the back of the head. Furthermore, a face position may be specified from the shape of the head, and the positions of the eyes may be specified from the face configuration.

Further, for the fingertip, for example, in the shape of the hand with the index finger up, only the fingertip of the index finger is recognized, and in a case where the five fingers are spread far apart, the position of the fingertip of the index finger is not detected. In such a manner, the erroneous detection of the motion of the user may be reduced so as to recognize the motion with high accuracy.

Additionally, the example in which the hand or the fingertip of the user is used to give an operation instruction has been described hereinabove, but other things may be used. For example, the number of blinks may be used. Further, the user may use motions that need learning other than intuitive motions. In such a manner, remote control of a higher level can be achieved. Further, for the line of sight for specifying the operation device 11 on the basis of the eye of the user, in a case where the operation device 11 is small, a direction of the line of sight is easily specified. In a case where the operation device 11 is large, however, all lines of sight to wide range directions may be targets. In this regard, in order to specify the direction of the line of sight, the operation device 11 of a certain size may be provided with, for example, a mark or the like having the size by which the direction of the line of sight can be specified, and when the line of sight to that mark is detected, it may be recognized that the line of sight is toward the operation device provided with the mark.

### <<2. First Modified Example of First Embodiment>>

Hereinabove, the example in which the display unit 32 is provided to the operation device 11 so as to display the UIs on the display unit 32 has been described. However, the UIs may be displayed on an HMD (Head Mount Display).

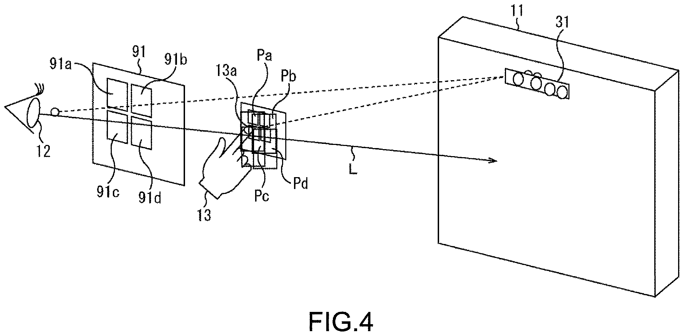

Fig. 4 shows a configuration example of an outer appearance of the operation device 11 configured to display UIs on an HMD 91. In this case, operation buttons 91a to 91d of UIs are displayed on the HMD 91 between the eye 12 and the fingertip 13a. Therefore, in this case, as shown in Fig. 4, when the eye 12, the operation button 91c, and the fingertip 13a are aligned on a straight line of the line of sight L, the operation button 91c is assumed to be selected.

For user operations, a difference is that the UIs are displayed on the HMD 91. The user only has to give the line of sight to any one of the operation buttons 91a to 91d serving as UIs and place the fingertip 13a at the tip of the line of sight. This also enables the operation device 11 to be remotely controlled by means of an intuitive operation.

It should be noted that in the case of Fig. 4, the operation device 11 and the HMD 91 are connected to each other via a communication apparatus (not shown in the figure) by wire or wirelessly, and the drive instruction unit 74 is configured to control display of the UIs on the HMD 91.

Further, the remote control processing of the operation device 11 of Fig. 4 is basically similar to the processing described with reference to the flowchart of Fig. 3, and the description thereof will thus be omitted.

### <<3. Second Modified Example of First Embodiment>>

Further, the example in which the operation device 11 of Fig. 4 is constituted of the main body of the operation device 11 and the HMD 91 has been described. However, the imaging unit 31 that specifies the positions of the eye 12 and the fingertip 13a may be provided to a position other than the main body of the operation device 11 as long as the positions of the eye 12 and the fingertip 13a can be specified. For example, the imaging unit 31 may be provided to the HMD 91 or the vicinity thereof.

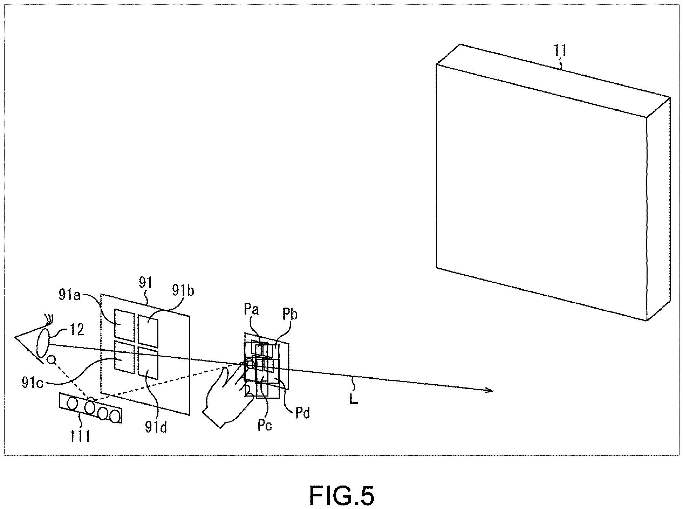

Fig. 5 shows a configuration example of an outer appearance of the operation device 11 configured to provide the imaging unit 31 to the HMD 91 or the vicinity thereof.

In other words, in this case, the imaging unit 31 is connected to the operation device 11 by wire or wirelessly, and supplies captured images to the control unit 51 of the main body of the operation device 11.

Further, the remote control processing of the operation device 11 of Fig. 4 is basically similar to the processing described with reference to the flowchart of Fig. 3, and the description thereof will thus be omitted.

### <<4. Second Embodiment>>

Hereinabove, the example in which the operation device 11 is a single operation device has been described. However, for example, a plurality of operation devices may be provided to measure the positions of the eye and the fingertip of the user and the target operation device with use of a plurality of imaging units, so that the plurality of operation devices can be switched to perform remote control in conformity with measurement results.

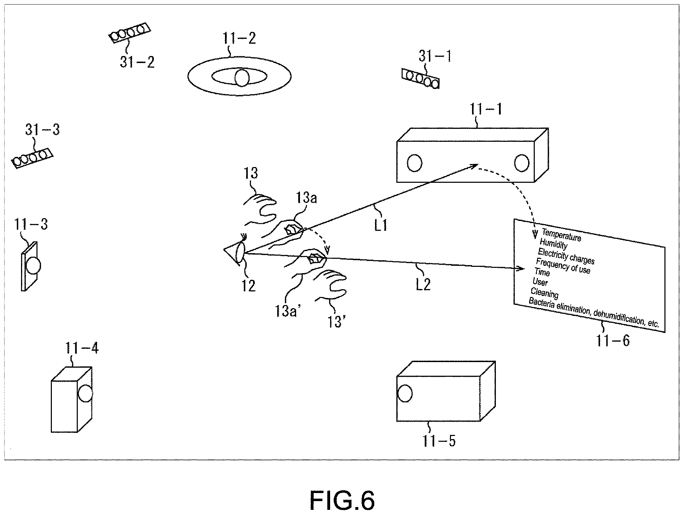

Fig. 6 shows a configuration example of an operation device system in which positions of an eye and a fingertip of a user and a target operation device are measured with use of a plurality of operation devices and a plurality of imaging units, so that the plurality of operation devices can be switched to perform remote control in conformity with measurement results.

The operation device system of Fig. 6 includes operation devices 11-1 to 11-6 and imaging units 31-1 to 31-3. It should be noted that in Fig. 6 the imaging units 31-1 to 31-3 are assumed to be provided to the operation devices 11-1 to 11-3, respectively, and the imaging units are not assumed to be provided to the operation devices 11-4 to 11-6. Further, the operation devices 11-1 to 11-6 are, for example, an air conditioner, a light, an intercom, a PC, a planter, and a display, respectively.

Further, out of the operation devices 11-1 to 11-6, the operation device 11-1 as an air conditioner is a master device and controls operations of the operation devices 11-2 to 11-6 to be the other slave devices. In other words, if any one of the operation devices 11-1 to 11-6 is set to a target device, the operation device 11-1 as the air conditioner recognizes a positional relationship between the eye and the fingertip of the user and the target device, and a user operation, determines an operation instruction, specifies an operation instruction, and supplies the operation instruction to the target device.

Thus, in the operation device system of Fig. 6, at least one master device is necessary. In other words, in Fig. 1, a single operation device 11 may be assumed as a master device itself. Further, a plurality of operation devices 11 that can each function as a master device may be provided in the operation device system. In such a case, any one of the operation devices 11, which is to be a master device, controls the operation of an operation device 11 that is to be a target device.

Next, an example of a specific remote control method will be described. For example, as shown in Fig. 6, when an eye 12, a hand 13, and the operation device 11-1 are aligned on a straight line being a line of sight L1, the operation device 11-1 serving as a master device recognizes that a target device is the operation device 11-1 on the basis of images captured with the imaging units 31-1 to 31-3.

Subsequently, when the user moves a hand 13a from the opened state of the hand 13 to make a motion such as pinching, and also moves the line of sight of the eye 12 from the line of sight L1 to a line of sight L2 and moves the hand to a hand 13a' and then to an opened hand 13'. Thus, the eye 12, the hand 13', and the operation device 11-6 as a display are aligned on a straight line being the line of sight L2.

Here, on the basis of control rules, with the series of motions, the operation device 11-6 constituted of a display displays UIs of the operation device 11-1, and the user gives the line of sight L2 to the UIs displayed on this operation device 11-6 and also moves the hand 13' on the straight line being the line of sight L2 to perform a motion corresponding to a UI. Thus, remote control of the operation device 11-1 is achieved.

As a result, the user gives the line of sight L2 to the UIs displayed on the display 11-6 and moves the hand 13' on the straight line being the line of sight L2. Thus, the operation device 11-1 can be remotely controlled by the remote control processing of Fig. 3, which is similar to that of the operation device 11 of Fig. 1.

### <Functional Configuration Example for Achieving Operation Device System of Fig. 6>

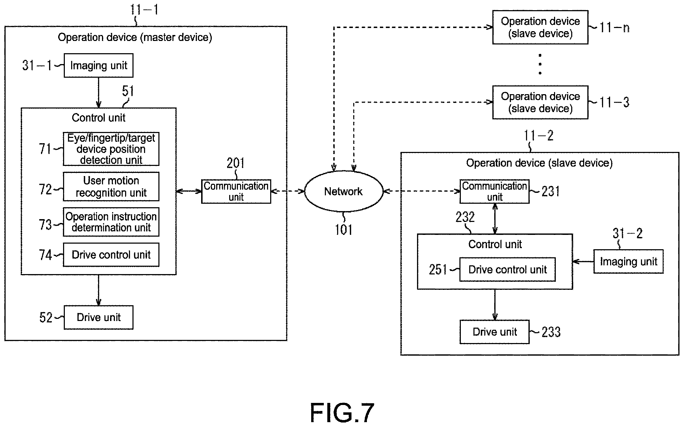

Next, with reference to Fig. 7, description will be given on a functional configuration example for achieving the operation device 11-1 to be a master device and the operation devices 11-2 to 11-6 to be slave devices, the operation devices 11-1 to 11-6 being for achieving the operation device system of Fig. 6. It should be noted that the imaging units 31-1 to 31-3 are assumed to be provided to the operation devices 11-1 to 11-3, respectively, and the imaging units are not assumed to be provided to the operation devices 11-4 to 11-6. However, images captured with the imaging units 31-1 to 31-3 are images for recognizing an eye, a hand (fingertip), a target operation device, UIs, and a motion, as in the case of the operation device 11 of Fig. 1, and any image is supplied to the operation device 11 to be a master device, and the operation device 11 to be a master device executes corresponding processing.

Further, the operation devices 11-1 to 11-6 can mutually receive and give information and data via a network 101 including the Internet, a LAN (Local Area Network), and the like. The images captured with the respective imaging units 31-1 to 31-3 are supplied to the operation device 11-1 as a master device. The operation device 11-1 recognizes a motion of the user on the basis of changes in the position of the hand of the user, which are obtained from time-series images, and specifies an operation instruction corresponding to the motion of the user on the basis of the control rules, to supply the operation instruction to a target device that is any one of the operation devices 11-2 to 11-6 serving as the slave devices.

A basic function of the operation device 11-1 serving as the master device is similar to that of the operation device 11 of Fig. 1, but the operation device 11-1 further includes a communication unit 201.

The communication unit 201 receives images supplied from the imaging units 31-2 and 31-3 via the network 101 and also transmits an operation instruction to the operation devices 11-2 to 11-6 to be target devices determined by the operation instruction determination unit 73.

The operation devices 11-2 to 11-6 serving as the slave devices each include a communication unit 231, a control unit 232, and a drive unit 233. Further, of those, the operation devices 11-2 and 11-3 include the imaging units 31-2 and 31-3, respectively.

The communication unit 231 is basically similar to the communication unit 201. The communication unit 231 supplies the image captured with the imaging unit 31, which is supplied from the control unit 232 via the network 101, to the operation device 11-1 serving as the master device, acquires an operation instruction supplied from the operation device 11-1 serving as the master device, and supplies the operation instruction to the control unit 232.

The control unit 232 controls the whole of the operations of the operation devices 11-2 to 11-6 serving as the slave devices and includes a drive control unit 251.

The drive control unit 251 is basically similar to the drive control unit 74. However, since the master device may not be provided with a function corresponding to the display unit 32, control information necessary in this case, which includes a UI display image, a UI image that is necessary to display a UI necessary for control, and information on the control rules, is supplied to the operation device 11-1 serving as the master device.

The operation device 11-1 acquires the control information of the operation devices 11-2 to 11-6 serving as the slave devices, the slave devices having an unknown function of displaying UIs on a display that is not provided to the operation device 11-1. Thus, the operation device 11-1 can recognize and control various operations achieved by the drive units 233 of the slave devices.

The drive unit 233 is basically similar to the drive unit 52 and corresponds to the function of each slave device. The drive unit 233 is, for example, a light-emitting unit in the operation device 11-2 serving as a light, a call function and a speaking function in the operation device 11-3 serving as an intercom, an arithmetic processing function in the operation device 11-4 serving as a PC, a fertilizer supply function or a water supply function for plants and the like in the operation device 11-5 as a planter, and a display function in the operation device 11-6 serving as a display.

### <Remote Control Processing of Operation Device System of Fig. 6>

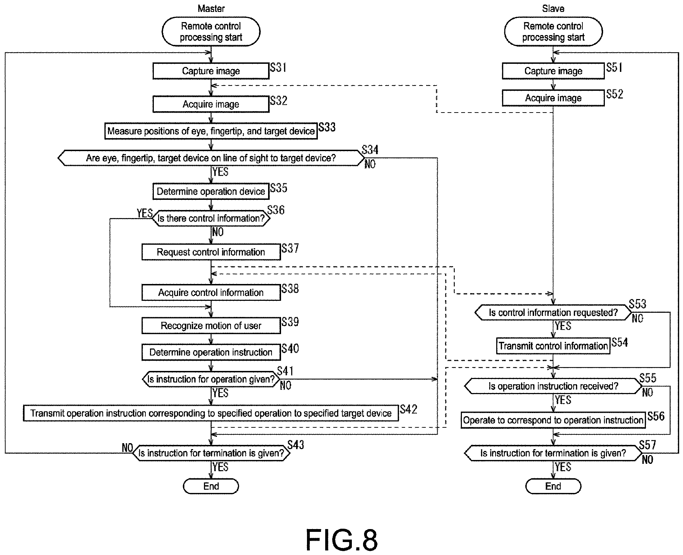

Next, the remote control processing of the operation device system of Fig. 6 will be described with reference to a flowchart of Fig. 8. It should be noted that, in the description of this processing, the operation device 11-1 of Fig. 6 is a master device, a UI for controlling the operation of the operation device 11-1 serving as the master device is displayed by the operation device 11-6 having a display function, and the displayed UI is subjected to processing similar to the remote control processing described above with reference to the flowchart of Fig. 3, so that remote control is performed.

In Step S31, the imaging unit 31-1 captures an image of a direction in which a user who operates the operation devices 11-1 to 11-6 is present, and supplies the captured image to the control unit 51.

Here, in Step S51, the imaging unit 31-2 captures an image of a direction in which the user who operates the operation devices 11-1 to 11-6 is present, and supplies the captured image to the control unit 232.

In Step S52, the control unit 232 controls the communication unit 231 to transmit the captured image to the operation device 11-1 via the network 101.

In Step S32, the control unit 51 acquires the image transmitted from the imaging unit 31-1 and the image transmitted from the operation device 11-2 and received via the communication unit 201, and then supplies those images to the eye/fingertip/target device position detection unit 71. At that time, similarly, a captured image is supplied also from the operation device 11-3 including the imaging unit 31-3, to the operation device 11-1 serving as the master device. Further, in the operation devices 11-4 to 11-6 including no imaging units 31, the processing of Step S51 and S52 are skipped.

In Step S33, the eye/fingertip/target device position detection unit 71 detects positions of an eye and a hand of the user and each of the operation devices 11-1 to 11-6 that can be a target device within a space, on the basis of the image supplied from the imaging unit 31-1 and the images transmitted from the operation devices 11-2 and 11-3.

In Step S34, the eye/fingertip/target device position detection unit 71 determines whether a positional relationship between the eye and the hand of the user and the target device is on a straight line. In Step S34, for example, as shown in Fig. 6, when the user gives the line of sight to the operation device 11-1 and moves his/her hand to be put on the line of sight L such that the eye 12 and the hand 13 (fingertip 13a) of the user and the operation device 11-1 are aligned on the straight line, the processing proceeds to Step S35.

In Step S35, the eye/fingertip/target device position detection unit 71 specifies an operation device 11 to be a target device. In the example of Fig. 6, the operation device 11-1 is specified as a target device.

In Step S36, the operation instruction determination unit 73 determines whether control information including UI images of the operation device 11 as a target device, control rules, and the like is stored in a built-in memory (not shown in the figure). In Step S36, for example, if it is determined that there has been no experience of control of the operation of the operation device 11-1 and no control information stored, the processing proceeds to Step S37.

In Step S37, the operation instruction determination unit 73 controls the communication unit 201 to request the operation device 11, which is to be controlled, for control information.

In Step S51, the drive control unit 251 of the operation device 11 serving as the slave device controls the communication unit 231 to determine whether the control information is requested. In Step S51, when the control information is requested by the processing of Step S37, the processing proceeds to Step S52.

In Step S52, the drive control unit 251 reads control information including UI images for controlling the operation device 11 thereof and control rules, which is stored in a memory (not shown in the figure) and controls the communication unit 231 to transmit the control information to the operation device 11-1 serving as the master device.

In Step S38, the operation instruction determination unit 73 acquires the control information of the operation device 11 to be controlled and stores the control information in a memory (not shown in the figure). It should be noted that, in this example, the operation target is the operation device 11-1 serving as the master device, and the operation device 11-1 naturally holds control information on the operation device 11-1 itself. Thus, in Step S36, the control information is assumed to be present, and the processing of Steps S37 and S38 are skipped. Further, similarly, in Step S53, since the control information is not requested, the processing of Step S52 is also skipped.

In Step S39, the user motion recognition unit 72 recognizes a motion of the user, which is made on the operation device 11 serving as the target device, on the basis of time-series changes in information on the positions of the eye, the fingertip, and the target device that are recognized by the eye/fingertip/target device position detection unit 71. The user motion recognition unit 72 then supplies information of the recognized motion to the operation instruction determination unit 73.

For example, the index finger and the thumb are brought into contact with each other at the fingertips thereof from the opened state of the hand 13 to make a motion of gripping indicated by the hand 13a, and while moving the line of sight from the line of sight L1 to the line of sight L2, a motion of moving the hand to the hand 13a' and then to the hand 13' is recognized. Information on the recognized motion is then supplied to the operation instruction determination unit 73.

In Step S40, when acquiring the information of the motion, which is supplied from the user motion recognition unit 72, the operation instruction determination unit 73 searches for a corresponding motion out of the motions registered in the control information stored in the built-in memory and determines (specifies) an operation instruction associated with the searched motion and supplies information on the operation instruction as a determination result to the drive control unit 74.

In other words, as shown in Fig. 6, after the index finger and the thumb are brought into contact with each other at the fingertips thereof from the opened state of the hand 13 to make a shape of the hand 13a like gripping, the hand is moved to the hand 13a' and then opened and moved to the hand 13' while moving the line of sight from the line of sight L1 to the operation device 11-1 to the line of sight L2 to the operation device 11-6. It is recognized that such a motion intends to display UIs for controlling the operation device 11-1 serving as the target device on the operation device 11-6.

In other words, in this case, the target devices are two devices, the operation device 11-1 serving as the air conditioner and master device, and the operation device 11-6 serving as the display for displaying UIs for controlling the operation device 11-1 and as the slave device.

In Step S41, the operation instruction determination unit 73 determines whether the information on the operation instruction gives an instruction for some operation. In Step S41, if an instruction for some operation is given, the processing proceeds to Step S42.

In Step S42, the drive control unit 74 controls the communication unit 201 to transmit the operation instruction to the operation device 11 corresponding to the target device, on the basis of the information on the operation instruction.

In Step S55, the drive control unit 251 controls the communication unit 231 to determine whether the operation instruction has been received. In Step S55, for example, when the operation instruction has been received by the processing of Step S42, the processing proceeds to Step S56.

In Step S56, the drive control unit 51 controls the drive unit 233 to drive an operation corresponding to the operation instruction.

In other words, for example, information on a display image of a UI for controlling the operation of the operation device 11-1 is transmitted, as an operation instruction, to the operation device 11-6 serving as the slave device by the communication unit 201.

For example, after the index finger and the thumb are brought into contact with each other at the fingertips thereof from the opened state of the hand 13 to make a shape of the hand 13a like gripping, the hand is moved to the hand 13a' and then opened and moved to the hand 13' while moving the line of sight from the line of sight L1 to the operation device 11-1 to the line of sight L2 to the operation device 11-6. In order to correspond to such a motion, an operation instruction to cause the operation device 11-6 to display a UI for controlling the operation device 11-1 serving as the target device is transmitted. Through this processing, the operation device 11-6 serving as the display and slave device causes the display, which is the drive unit 233, to display a UI for controlling the operation device 11-1 serving as the target device and air conditioner as shown in Fig. 6.

Further, in a case where the operation instruction gives an instruction for the operation device 11-1, which serves as the air conditioner and target device, to perform an operation that is specified from the menu of UIs displayed on the operation device 11-6 as shown in Fig. 6, the drive control unit 74 of the operation device 11-1 serving as the master device and target device controls the drive unit 52.

Through the processing described above, for example, the drive instruction unit 74 controls the drive unit 52 of the operation device 11-1 serving as the target device to increase the number of revolutions of a fan motor in order to increase the number of revolutions of a compressor or the air volume of a fan to change the setting of the air volume or the temperature.

It should be noted that, in Step S43, the drive instruction unit 74 determines whether the operation instruction gives an instruction to terminate the operation. If the operation instruction does not indicate an instruction to terminate the operation, the processing returns to Step S31 and repeats the subsequent processing.

Further, in Step S34, in a case where the eye, the fingertip, and the target device are not aligned on the straight line, the processing of Steps S35 to S42 are skipped. Further, in Step S43, if the operation of the operation instruction is determined to indicate the termination, the processing is terminated. At that time, in Step S57, the operation is determined to be terminated also in the drive instruction unit 251. It should be noted that if it is determined in Step S57 that an instruction for termination is not given, the processing returns to Step S51 and repeats the subsequent processing.

Further, in Step S41, if an instruction for some operation is not given, that is, if content of an operation is not determined and it is unknown what operation instruction is given, because a motion of a user involves time-series motions, and an operation cannot be determined unless time-series motions are observed for a predetermined a time, the processing of Step S42 is skipped.

By the processing described above, in a case where an operation device 11 to be operated does not have a display function as shown in Fig. 6, the user can use an operation device having a display function as a slave device to display UIs and can control the other operation device.

As a result, without necessity of an accessory device such as a remote controller, the target device can be remotely controlled by means of an intuitive motion using only an eye and a fingertip. It should be noted that the operation device 11 to be a master device is desirably operable on every occasion. Thus, for example, the operation device 11 is desirably to be connected to a power supply on every occasion. Further, hereinabove, the example in which the master device is set as an operation target, the slave device is caused to display a UI for controlling the master device, and the master device is driven by operating the UI has been described. However, as a matter of course, a first slave device may be set as an operation target, a second slave device having a display function may be caused to display a UI, and the displayed UI may be operated such that the drive of the first slave device may be controlled. In this case, the second slave device that displays the UI also becomes a device to be operated because of achieving a function of displaying a UI. Conversely, a master device having a display function may display a UI for controlling the operation of a slave device, and the displayed UI may be operated such that the drive of the slave device that is a device to be operated may be controlled.

### <<5. First Modified Example of Second Embodiment>>

Hereinabove, the example has been described, in which when a first operation device to be remotely controlled does not have a function of displaying a UI, a second operation device having a display function is separately remotely controlled via a network to display a UI, so that the first operation device is remotely controlled. However, in a case where an operation device to be remotely controlled does not need UIs, the operation device may be directly remotely controlled without using UIs.

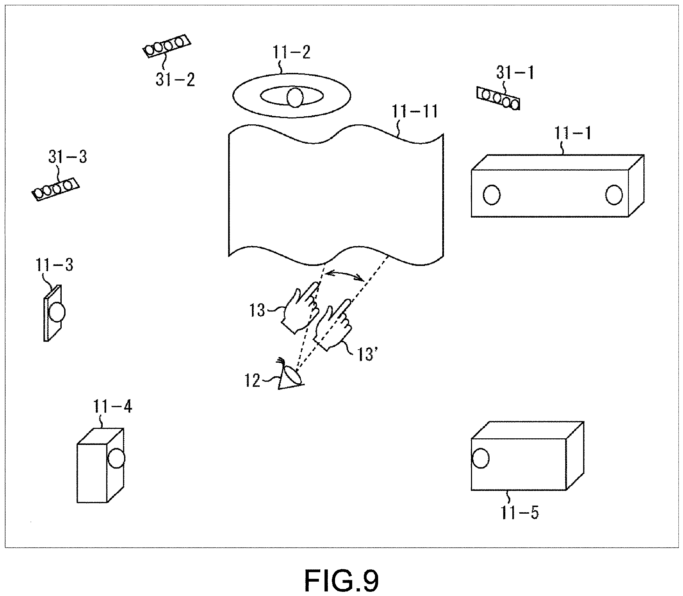

In other words, for example, as shown in Fig. 9, an operation device 11-11 constituted of a curtain may be provided instead of the operation device 11-6, and in a state where the eye 12 and the hand 13 are present on the user's line of sight to the curtain on the basis of the imaging units 31-1 to 31-3, for example, when the hand 13 is moved to the hand 13' or moved in the opposite direction to give an instruction to open a closed curtain or close an opened curtain, the curtain may be driven to be opened or closed.

It should be noted that the remote control processing in the example as shown in Fig. 9 is similar to the processing described with reference to the flowchart of Fig. 8, and the description thereof will thus be omitted.

### <<6. Second Modified Example of Second Embodiment>>

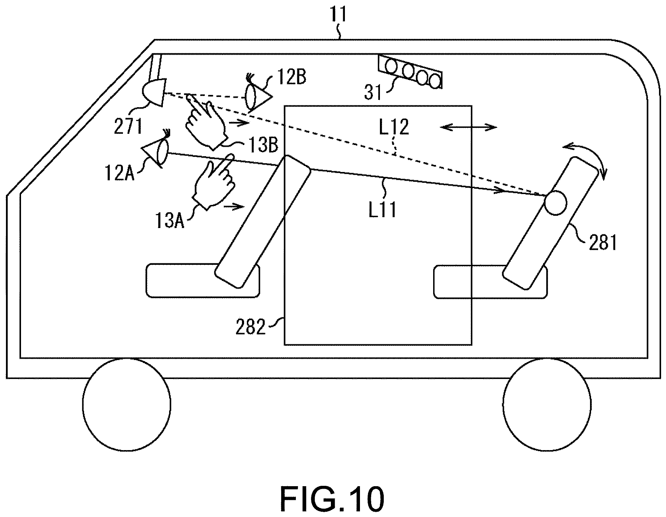

Further, as shown in Fig. 10, in a case of a vehicle, a rear seat 281 within the vehicle may be configured as the drive unit 233 of Fig. 7. In a state where a line of sight L11 is given to a predetermined mark 281a of the rear seat 281 and an eye 12A and a fingertip 13A are present on the line of sight L11, the fingertip 13A may be moved in a direction of the arrows so as to recline the rear seat 281. Similarly, when the fingertip 13A is moved in the direction opposite to the arrows, the reclined rear seat may be returned to the initial position.

In this case, the rear seat 281 may be configured as a single operation device 11 like the remote control apparatus as in the example of Fig. 1. Alternatively, as in the example shown in Fig. 6, a remote control system in which an ECU (Engine Control Unit) of the vehicle is configured as a master device and the rear seat 281 is configured as a slave device may be configured to function.

Further, in the case of Fig. 10, the vehicle serving as the operation device 11 includes a rearview mirror 271 and the like. In this case, in a state where an eye 12B and a fingertip 13B are present on a user's line of sight L12 given to the mark 281a of the rear seat 281 through the rearview mirror 271, the fingertip 13B may be moved in a direction of the arrows so as to recline the rear seat. Similarly, when the fingertip 13B is moved in the direction opposite to the arrows, the reclined rear seat may be returned to the initial position.

It should be noted that it is desirable to easily recognize that the mark 281 is used for controlling reclining. Further, hereinabove, the example in which the rear seat of the vehicle is the operation device 11 has been described, but the present disclosure is not limited thereto as long as the operation device is a short distance away from the user. For example, the operation device only needs to be present at an unreachable position, such as a train, a boat, a plane, or a venue and to involve remote control.

Further, the remote control processing of Fig. 10 can be achieved by processing similar to the remote control processing described with reference to the flowchart of Fig. 3, and the description thereof will thus be omitted.

Further, hereinabove, the example in which the images captured with the imaging unit 31 are used in recognizing the positions of the eye, the hand, the target device, and the operation device to be remotely controlled by the user, such as the display unit, has been described. However, another configuration may be used as long as it can measure positions. For example, an infrared camera or the like may be used to specify the positions of the eye and the hand from a silhouette of a heat source having a temperature close to a body temperature of a human body.

Further, in the case of the positional relationship in which a position of a site indicating behavior, such as an eye, a hand, or a finger of the user, cannot be directly detected from the image captured with the imaging unit 31, a function of estimating positions from the shape of a human body (hairs, ear, head, shoulder, neck, face orientation, breathing, sound, voice, characteristics of human body, shape, estimation of skeletal structure, muscle, arm, elbow, shoulder, orientation, or recognizable auxiliary parts or estimation information of them) and correcting them may be provided.

It should be noted that hereinabove, the example in which the open/close of the curtain and the reclining of the rear seat are controlled has been described as a modified example. However, another configuration may be used as long as it can control operations by remote control. For example, a flying object that flies with a rotary wing, a fixed wing, or the like, such as a so-called drone, various robotic vacuum cleaners, radio control devices, baggage sorting apparatuses, or a virtual object (which is set as an operation device within a virtual space) may be used.

### <<7. Correction of Line of Sight>>

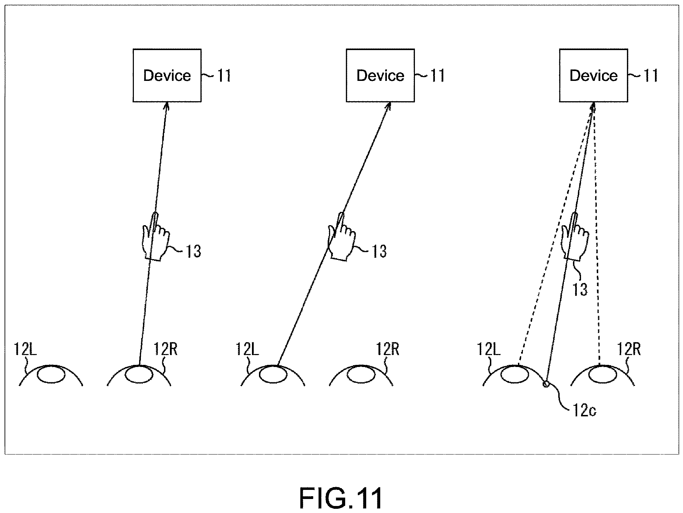

As shown in the left part, the center part, and the right part of Fig. 11, the line of sight begins from a right eye 12R, a left eye 12L, or a middle position 12C therebetween and ends at a target operation device or a UI display position.

Thus, if any one of the settings is provided, remote control with higher accuracy can be achieved.

In this regard, definition of a line of sight from those above can be set in advance by calibration. Thus, remote control with higher accuracy can be achieved.

Further, learning may be performed on the basis of the position of an eye and the presence or absence of errors when a motion can be recognized, and correction may be made depending on users.

### <<8. Application Example>>

### <Example Executed by Software>

By the way, the series of processing described above can be executed by hardware and can also be executed by software. In a case where the series of processing is executed by software, programs constituting the software are installed from a recording medium in a computer incorporated in dedicated hardware or a general-purpose personal computer that can execute various functions by installing various programs, for example.

Fig. 17 shows a configuration example of a general-purpose personal computer. This personal computer includes a CPU (Central Processing Unit) 1001. An input/output interface 1005 is connected to the CPU 1001 via a bus 1004. A ROM (Read Only Memory) 1002 and a RAM (Random Access Memory) 1003 are connected to the bus 1004.

Connected to the input/output interface 1005 are an input unit 1006 including input devices such as a keyboard and a mouse with which a user inputs an operation command, an output unit 1007 that outputs a processing operation screen or an image of processing results to a display device, a storage unit 1008 including a hard disk drive or the like that stores programs or various types of data, and a communication unit 1009 that includes a LAN (Local Area Network) adapter and executes communication processing via a network typified by the Internet. Further, a drive 1010 is connected to the input/output interface 1005. The drive 1010 reads and writes data with respect to a removable medium 1011 such as a magnetic disk (including a flexible disk), an optical disc (including a CD-ROM (Compact Disc-Read Only Memory) and a DVD (Digital Versatile Disc)), a magneto-optical disc (including an MD (Mini-Disc)), or a semiconductor memory.

The CPU 1001 executes various types of processing according to a program stored in the ROM 1002 or a program that is read from the removable medium 1011 such as a magnetic disk, an optical disc, a magneto-optical disc, or a semiconductor memory, installed in the storage unit 1008, and then loaded from the storage unit 1008 to the RAM 1003. Further, the RAM 1003 appropriately stores data and the like necessary when the CPU 1001 executes various types of processing.

In the computer configured as described above, the CPU 1001 loads the program stored in, for example, the storage unit 1008 to the RAM 1003 via the input/output interface 1005 and the bus 1004 and executes the program, to perform the series of processing described above.

The program executed by the computer (CPU 1001) can be provided by, for example, being recorded on the removable medium 1011 as a package medium or the like. Further, the program can be provided via a wireless or wired transmission medium such as a local area network, the Internet, and digital satellite broadcasting.

In the computer, when the removable medium 1011 is mounted to the drive 1010, the program can be installed in the storage unit 1008 via the input/output interface 1005. Further, the program can be received by the communication unit 1009 via the wireless or wired transmission medium and installed in the storage unit 1008. In addition, the program can be installed in advance in the ROM 1002 or the storage unit 1008.

It should be noted that the program executed by the computer may be a program that is processed chronologically along the described order in this specification or may be a program that is processed in parallel or at a necessary timing such as when an invocation is performed.

Further, in this specification, a system means an aggregation of a plurality of constituent elements (apparatus, module (parts), and the like), regardless of whether all constituent elements are included in an identical casing. Therefore, a plurality of apparatuses accommodated in separate casings and connected to one another via a network is a system, and one apparatus including a plurality of modules in one casing is also a system.

It should be noted that the embodiments of the present disclosure are not limited to the embodiments described above and can be variously modified without departing from the gist of the present disclosure.

For example, the present disclosure can have a configuration of cloud computing in which a plurality of apparatuses share one function and cooperate to perform processing via a network.

Further, the steps described in the flowchart described above can be executed by one apparatus or shared and executed by a plurality of apparatuses.

Additionally, in a case where one step includes a plurality of processing steps, the plurality of processing steps of the single step can be executed by one apparatus or shared and executed by a plurality of apparatuses.

It should be noted that the present disclosure can also have the following configurations.
<1> A remote control apparatus, including:
   a position detection unit that detects positions of a device to be operated, and an eye and a hand of a user;
   a user motion recognition unit that recognizes a motion of the user when a positional relationship between the eye, the hand, and the device maintains a predetermined positional relationship;
   an operation instruction specifying unit that specifies an operation instruction for the device to be operated, the operation instruction corresponding to the motion of the user; and
   a drive instruction unit that drives the device to be operated on the basis of the operation instruction specified by the operation instruction specifying unit.
<2> The remote control apparatus according to <1>, in which
   the user motion recognition unit specifies a line of sight of the user from the eye to the device on the basis of the positional relationship between the eye, the hand, and the device, and recognizes the motion of the user when a positional relationship in which the hand is located on a straight line being the line of sight is maintained.
<3> The remote control apparatus according to <2>, in which
   the user motion recognition unit specifies the line of sight of the user from the eye to the device on the basis of the positional relationship between the eye, the hand, and the device, and recognizes a motion of the hand on the straight line being the line of sight as the motion of the user when a positional relationship in which a predetermined finger of the hand is located on the straight line being the line of sight is maintained.
<4> The remote control apparatus according to any one of <1> to <3>, in which
   the device to be operated further includes a display unit that displays a UI (User Interface) image for controlling an operation of the device, and
   the user motion recognition unit specifies a line of sight of the user from the eye to a predetermined UI image on the display unit of the device on the basis of the positional relationship between the eye, the hand, and the device, and recognizes the motion of the user, which is made when a positional relationship in which the hand is located on a straight line being the line of sight is maintained, as a motion of the user to the UI image.
<5> The remote control apparatus according to <4>, in which
   the display unit is a see-through HMD (Head Mount Display) that the user wears, and
   the user motion recognition unit specifies the line of sight of the user from the eye to a predetermined UI image on the HMD serving as the display unit of the device on the basis of the positional relationship between the eye, the hand, and the device, and recognizes the motion of the user, which is made when the positional relationship in which the hand is located on the straight line being the line of sight is maintained at a forward position relative to the HMD when viewed from the user, as a motion of the user to the UI image.
<6> The remote control apparatus according to any one of <1> to <5>, in which
   the position detection unit estimates, when the position detection unit fails to detect the position of at least any one of the eye and the hand, the positions of the eye and the hand on the basis of another body part of the detected user, and
   the user motion recognition unit recognizes the motion of the user when an estimated positional relationship between the eye, the hand, and the device maintains a predetermined positional relationship.
<7> The remote control apparatus according to any one of <1> to <6>, in which
   the position detection unit includes a plurality of imaging units that capture images in a plurality of imaging directions, and detects the positions of the device to be operated, and the eye and the hand of the user on the basis of the images captured with the plurality of imaging units.
<8> The remote control apparatus according to any one of <1> to <7>, in which
   the user motion recognition unit recognizes the motion of the user when any one of a first positional relationship between a right eye of the eyes, the hand, and the device, a second positional relationship between a left eye of the eyes, the hand, and the device, and a third positional relationship between a middle position of the left and right eyes of the eyes, the hand, and the device maintains a predetermined positional relationship.
<9> The remote control apparatus according to <1>, further including
   a presentation unit that presents an operation instruction for the device to be operated to the user, the operation instruction corresponding to the motion of the user.
<10> The remote control apparatus according to <9>, in which
   the presentation unit includes a display unit that displays a UI corresponding to the operation instruction, a light-emitting unit that emits light corresponding to the operation instruction, a sound output unit that outputs sound corresponding to the operation instruction, an odor generation unit that generates an odor corresponding to the operation instruction, or a reaction or an operation of the device to be operated, the reaction or the operation corresponding to the operation instruction.
<11> A remote control method, including the steps of:
   detecting positions of a device to be operated, and an eye and a hand of a user;
   recognizing a motion of the user when a positional relationship between the eye, the hand, and the device maintains a predetermined positional relationship;
   specifying an operation instruction for the device to be operated, the operation instruction corresponding to the motion of the user; and
   driving the device to be operated on the basis of the specified operation instruction.
<12> A program causing a computer to function as:
   a position detection unit that detects positions of a device to be operated, and an eye and a hand of a user;
   a user motion recognition unit that recognizes a motion of the user when a positional relationship between the eye, the hand, and the device maintains a predetermined positional relationship;
   an operation instruction specifying unit that specifies an operation instruction for the device to be operated, the operation instruction corresponding to the motion of the user; and
   a drive instruction unit that drives the device to be operated on the basis of the operation instruction specified by the operation instruction specifying unit.
<13> A remote control system, including
   a plurality of devices to be operated that include at least one master device and at least one different slave device,
   the master device including
   a position detection unit that detects positions of the master device, the slave device, and an eye and a hand of a user,
   a user motion recognition unit that recognizes a motion of the user when a positional relationship between the eye, the hand, and the master device or a positional relationship between the eye, the hand, and the slave device maintains a predetermined positional relationship,
   an operation instruction specifying unit that specifies an operation instruction for the master device or the slave device, the operation instruction corresponding to the motion of the user,
   a master drive instruction unit that drives the master device on the basis of the operation instruction, and
   a master communication unit that transmits the operation instruction to the slave device,
   the slave device including
   a slave communication unit that receives the operation instruction for the slave device, the operation instruction being transmitted from the master device, and
   a slave drive instruction unit that drives the slave device on the basis of the operation instruction.
<14> The remote control system according to <13>, in which
   when the remote control system includes a first operation device and a second operation device, the first operation device being the master device or the slave device and having a display function, the second operation device being the master device or the slave device and being to be operated,
   the position detection unit detects the positions of the first operation device, the second operation device, and the eye and the hand of the user,
   the user motion recognition unit recognizes a first predetermined motion of the user and recognizes the first operation device as a target device for displaying a UI that controls the second operation device, when the positional relationship between the eye, the hand, and the first operation device maintains a predetermined first positional relationship,
   the operation instruction specifying unit specifies an operation instruction causing the first operation device to display the UI that controls the second operation device in accordance with the first motion of the user,
   the master drive instruction unit drives the first operation device on the basis of the operation instruction for displaying the UI that controls the second operation device,
   the user motion recognition unit recognizes a second predetermined motion of the user and recognizes the second operation device as a target device for performing an operation corresponding to an operation of the UI displayed by the first operation device, when the positional relationship between the eye, the hand, and the second operation device maintains a predetermined second positional relationship,
   the operation instruction specifying unit specifies an operation instruction causing the second operation device to perform the operation corresponding to the operation of the UI displayed by the first operation device in accordance with the second motion of the user, and
   the master drive instruction unit drives the second operation device on the basis of the operation instruction corresponding to the operation of the UI displayed by the first operation device.
<15> The remote control system according to <13>, in which
   the slave device is a curtain opening and closing apparatus.
<16> The remote control system according to <13>, in which
   the slave device is a reclining apparatus for a rear seat of a vehicle.
<17> The remote control system according to <16>, in which
   the user motion recognition unit recognizes the motion of the user on the basis of the positional relationship between the eye, the hand, and the slave device when a line of sight of the user is a line of sight to the reclining apparatus for a rear seat through a rearview mirror of the vehicle, the reclining apparatus being the slave device, and when a positional relationship in which the hand is located on a straight line being the line of sight is maintained.
<18> The remote control system according to <13>, in which
   the slave device includes a flying object that flies with a rotary wing or a fixed wing, various robotic vacuum cleaners, a radio control device, a baggage sorting apparatus, and a virtual object.

### Reference Signs List

11, 11-1 to 11-6, 11-11 operation device
12, 12A, 12B, 12' eye
13, 13A, 13B, 13' hand
13a, 13a' fingertip
31 imaging unit
32 display unit
51 control unit
52 drive unit
71 eye/fingertip/target device position detection unit
72 user motion recognition unit
73 operation instruction determination unit
74 drive instruction unit
91 display unit
111 imaging unit
121 network
201 communication unit
231 communication unit
232 control unit
233 drive unit
251 drive control unit
281 rear seat

## Claims

1. A remote control apparatus, comprising:
a position detection unit that detects positions of a device to be operated, and an eye and a hand of a user;
a user motion recognition unit that recognizes a motion of the user when a positional relationship between the eye, the hand, and the device maintains a predetermined positional relationship;
an operation instruction specifying unit that specifies an operation instruction for the device to be operated, the operation instruction corresponding to the motion of the user; and
a drive instruction unit that drives the device to be operated on the basis of the operation instruction specified by the operation instruction specifying unit.

2. The remote control apparatus according to claim 1, wherein
the user motion recognition unit specifies a line of sight of the user from the eye to the device on the basis of the positional relationship between the eye, the hand, and the device, and recognizes the motion of the user when a positional relationship in which the hand is located on a straight line being the line of sight is maintained.

3. The remote control apparatus according to claim 2, wherein
the user motion recognition unit specifies the line of sight of the user from the eye to the device on the basis of the positional relationship between the eye, the hand, and the device, and recognizes a motion of the hand on the straight line being the line of sight as the motion of the user when a positional relationship in which a predetermined finger of the hand is located on the straight line being the line of sight is maintained.

4. The remote control apparatus according to claim 1, wherein
the device to be operated further includes a display unit that displays a UI (User Interface) image for controlling an operation of the device, and
the user motion recognition unit specifies a line of sight of the user from the eye to a predetermined UI image on the display unit of the device on the basis of the positional relationship between the eye, the hand, and the device, and recognizes the motion of the user, which is made when a positional relationship in which the hand is located on a straight line being the line of sight is maintained, as a motion of the user to the UI image.

5. The remote control apparatus according to claim 4, wherein
the display unit is a see-through HMD (Head Mount Display) that the user wears, and
the user motion recognition unit specifies the line of sight of the user from the eye to a predetermined UI image on the HMD serving as the display unit of the device on the basis of the positional relationship between the eye, the hand, and the device, and recognizes the motion of the user, which is made when the positional relationship in which the hand is located on the straight line being the line of sight is maintained at a forward position relative to the HMD when viewed from the user, as a motion of the user to the UI image.

6. The remote control apparatus according to claim 1, wherein
the position detection unit estimates, when the position detection unit fails to detect the position of at least any one of the eye and the hand, the positions of the eye and the hand on the basis of another body part of the detected user, and
the user motion recognition unit recognizes the motion of the user when an estimated positional relationship between the eye, the hand, and the device maintains a predetermined positional relationship.

7. The remote control apparatus according to claim 1, wherein
the position detection unit includes a plurality of imaging units that capture images in a plurality of imaging directions, and detects the positions of the device to be operated, and the eye and the hand of the user on the basis of the images captured with the plurality of imaging units.

8. The remote control apparatus according to claim 1, wherein
the user motion recognition unit recognizes the motion of the user when any one of a first positional relationship between a right eye of the eyes, the hand, and the device, a second positional relationship between a left eye of the eyes, the hand, and the device, and a third positional relationship between a middle position of the left and right eyes of the eyes, the hand, and the device maintains a predetermined positional relationship.

9. The remote control apparatus according to claim 1, further comprising
a presentation unit that presents an operation instruction for the device to be operated to the user, the operation instruction corresponding to the motion of the user.

10. The remote control apparatus according to claim 9, wherein
the presentation unit includes a display unit that displays a UI corresponding to the operation instruction, a light-emitting unit that emits light corresponding to the operation instruction, a sound output unit that outputs sound corresponding to the operation instruction, an odor generation unit that generates an odor corresponding to the operation instruction, or a reaction or an operation of the device to be operated, the reaction or the operation corresponding to the operation instruction.

11. A remote control method, comprising the steps of:
detecting positions of a device to be operated, and an eye and a hand of a user;
recognizing a motion of the user when a positional relationship between the eye, the hand, and the device maintains a predetermined positional relationship;
specifying an operation instruction for the device to be operated, the operation instruction corresponding to the motion of the user; and
driving the device to be operated on the basis of the specified operation instruction.

12. A program causing a computer to function as:
a position detection unit that detects positions of a device to be operated, and an eye and a hand of a user;
a user motion recognition unit that recognizes a motion of the user when a positional relationship between the eye, the hand, and the device maintains a predetermined positional relationship;
an operation instruction specifying unit that specifies an operation instruction for the device to be operated, the operation instruction corresponding to the motion of the user; and
a drive instruction unit that drives the device to be operated on the basis of the operation instruction specified by the operation instruction specifying unit.

13. A remote control system, comprising
a plurality of devices to be operated that include at least one master device and at least one different slave device,
the master device including
a position detection unit that detects positions of the master device, the slave device, and an eye and a hand of a user,
a user motion recognition unit that recognizes a motion of the user when a positional relationship between the eye, the hand, and the master device or a positional relationship between the eye, the hand, and the slave device maintains a predetermined positional relationship,
an operation instruction specifying unit that specifies an operation instruction for the master device or the slave device, the operation instruction corresponding to the motion of the user,
a master drive instruction unit that drives the master device on the basis of the operation instruction, and
a master communication unit that transmits the operation instruction to the slave device,
the slave device including
a slave communication unit that receives the operation instruction for the slave device, the operation instruction being transmitted from the master device, and
a slave drive instruction unit that drives the slave device on the basis of the operation instruction.

14. The remote control system according to claim 13, wherein
when the remote control system includes a first operation device and a second operation device, the first operation device being the master device or the slave device and having a display function, the second operation device being the master device or the slave device and being to be operated,
the position detection unit detects the positions of the first operation device, the second operation device, and the eye and the hand of the user,
the user motion recognition unit recognizes a first predetermined motion of the user and recognizes the first operation device as a target device for displaying a UI that controls the second operation device, when the positional relationship between the eye, the hand, and the first operation device maintains a predetermined first positional relationship,
the operation instruction specifying unit specifies an operation instruction causing the first operation device to display the UI that controls the second operation device in accordance with the first motion of the user,
the master drive instruction unit drives the first operation device on the basis of the operation instruction for displaying the UI that controls the second operation device,
the user motion recognition unit recognizes a second predetermined motion of the user and recognizes the second operation device as a target device for performing an operation corresponding to an operation of the UI displayed by the first operation device, when the positional relationship between the eye, the hand, and the second operation device maintains a predetermined second positional relationship,
the operation instruction specifying unit specifies an operation instruction causing the second operation device to perform the operation corresponding to the operation of the UI displayed by the first operation device in accordance with the second motion of the user, and
the master drive instruction unit drives the second operation device on the basis of the operation instruction corresponding to the operation of the UI displayed by the first operation device.

15. The remote control system according to claim 13, wherein
the slave device is a curtain opening and closing apparatus.

16. The remote control system according to claim 13, wherein
the slave device is a reclining apparatus for a rear seat of a vehicle.

17. The remote control system according to claim 16, wherein
the user motion recognition unit recognizes the motion of the user on the basis of the positional relationship between the eye, the hand, and the slave device when a line of sight of the user is a line of sight to the reclining apparatus for a rear seat through a rearview mirror of the vehicle, the reclining apparatus being the slave device, and when a positional relationship in which the hand is located on a straight line being the line of sight is maintained.

18. The remote control system according to claim 13, wherein
the slave device includes a flying object that flies with a rotary wing or a fixed wing, various robotic vacuum cleaners, a radio control device, a baggage sorting apparatus, and a virtual object.
